# EUROPÄISCHE PATENTSCHRIFT

(11) **EP 2 438 372 B1**
(45) Veröffentlichungstag und Bekanntmachung des Hinweises auf die Patenterteilung: **05.05.2021**
(21) Anmeldenummer: 10722033.7
(22) Anmeldetag: 11.05.2010
(51) Int. Cl.: F25D 23/08, F25D 21/04, F25D 23/02

(54) **KÄLTEGERÄT**
REFRIGERATION APPLIANCE
APPAREIL FRIGORIFIQUE

(30) Priorität: 03.06.2009 DE 102009026665
(43) Veröffentlichungstag der Anmeldung: 11.04.2012
(73) Patentinhaber: BSH Hausgeräte GmbH, 81739 München (DE)
(72) Erfinder: ECKARTSBERG, Peter, 73433 Aalen (DE); FAUSER, Christoph, 89275 Elchingen (DE); LAIBLE, Karl-Friedrich, 89129 Langenau (DE); PFLOMM, Berthold, 89077 Ulm (DE)
(86) Internationale Anmeldenummer: PCT/EP2010/056420
(87) Internationale Veröffentlichungsnummer: WO 2010/139532

(56) Entgegenhaltungen:
- DE-A1-102006 010 029
- DE-U- 7 423 026
- JP-A- 54 008 766
- JP-U- 53 145 272
- JP-U- 59 016 969
- JP-U- 59 016 978
- US-A- 2 544 937

## Beschreibung

Die vorliegende Erfindung betrifft ein Kältegerät, insbesondere ein Haushaltskältegerät, mit einem Korpus, der wenigstens ein einseitig offenes Lagerfach umgibt, und einer Tür, die das Lagerfach verschließt und dazu an einer Vorderseite des Korpus das Lagerfach überdeckend anliegt. Herkömmlicherweise haben Kältegeräte dieser Art an der Innenseite ihrer Tür einen flachen, in das Lagerfach hinein eingreifenden Vorsprung, der die wirksame Dicke der Dämmstoffschicht der Tür vergrößert, ohne ihre von außen sichtbare Dicke zu erhöhen. Dennoch ist die Fläche, an der sich die Tür und Korpus berühren, die schwächste Stelle in der Isolation eines Kältegeräts, denn ein Luftspalt zwischen Tür und Korpus verbindet das Innere des Lagerfachs unmittelbar mit der Innenseite einer zwischen Tür und Korpus angeordneten Dichtung. Wenn keine geeigneten Gegenmaßnahmen getroffen werden, ist daher der vordere, türnahe Bereich des Lagerfachs stets wärmer als der hintere, und die wärmste Stelle des Lagerfachs befindet sich in dessen vorderer oberer Ecke.

Um eine Mindesthaltbarkeit von Kühlgut in dem Lagerfach gewährleisten zu können, muss garantiert sein, dass die Temperatur im Lagerfach nirgends einen vorgegebenen Grenzwert überschreitet. Eine inhomogene Temperaturverteilung führt dazu, dass wenn der Grenzwert an der warmen vorderen oberen Ecke des Lagerfachs eingehalten werden soll, die übrigen Bereiche des Lagerfachs auf noch tiefere Temperaturen abgekühlt werden müssen. Der Energieverbrauch eines Kältegeräts nimmt mehr als linear mit der Temperaturdifferenz zwischen seinem Lagerfach und der Umgebung zu. Eine unnötig tiefe Temperatur im Lagerfach wirkt sich daher stark auf die Wirtschaftlichkeit des Geräts aus. Zwar ist insbesondere von No-Frost-Kältegeräten bekannt, am Lagerfach ein Gebläse vorzusehen, welches für eine Luftströmung im Lagerfach und damit für einen verbesserten Temperaturausgleich zwischen unterschiedlich gut isolierten Bereichen des Lagerfachs sorgt. Das Gebläse benötigt aber seinerseits Antriebsenergie, die die Energiebilanz des Gerätes belastet, und da diese Antriebsenergie letztlich als Wärme in das Lagerfach abgegeben wird, muss sie durch entsprechende Mehrarbeit der Kältemaschine wieder beseitigt werden, was die Wirtschaftlichkeit des Geräts noch zusätzlich beeinträchtigt.

Die Offenlegungsschrift DE 10 2006 010 029 A1 zeigt eine Kühlgerätetür sowie eine Türdichtung für eine derartige Kühlgerätetür.

Die Patentschrift US 2,544,937 zeigt ein Verdampfergehäuse.

Die Gebrauchsmusterschrift DE 7 423 026 zeigt ein Kühlmöbel mit einem Innenbehälter und einer Tür, die in geschlossenem Zustand mit einer Türdichtung die Öffnung des Innenbehälters abschließt.

Aufgabe der Erfindung ist daher, ein Kältegerät zu schaffen, das eine verbesserte Homogenität der Temperaturverteilung in seinem wenigstens einen Lagerfach ohne den fortwährenden Einsatz von Antriebsenergie erzielt.

Die Aufgabe wird gelöst, indem bei einem Kältegerät mit einem Korpus, der ein einseitig offenes Lagerfach umgibt, und einer Tür, die in geschlossener Stellung an einer Vorderseite des Korpus das Lagerfach überdeckend anliegt und einen in das Lagerfach eingreifenden Vorsprung aufweist, wobei eine obere Flanke des Vorsprungs an der Decke des Korpus unter Ausbildung eines Luftspalts gegenüberliegt, an der Decke des Korpus ferner eine im Wesentlichen vertikale Flanke gebildet ist, die unter Verlängerung des Luftspalts einer Rückseite des Vorsprungs gegenüberliegt. Dieser Aufbau verlängert einerseits den Weg, den Luft in dem Luftspalt zwischen einem kalten Ende am Lagerfach und einem warmen Ende zurücklegen muss, und damit die Effizienz des Wärmetransports über den Luftspalt, zum Anderen behindert ein Knick im Luftspalt zwischen einem von der oberen Flanke des Vorsprungs und der Decke des Korpus begrenzten Abschnitt einerseits und einem zwischen der vertikalen Flanke der Decke und der Rückseite des Vorsprungs begrenzten Abschnitt andererseits die Bewegung der Luft zwischen dem kalten und dem warmen Ende.

Die vertikale Flanke ist Teil einer von der Decke nach unten vorspringenden Rippe. So kann wenigstens ein Teil des Raums zwischen der vertikalen Flanke und einer Rückwand des Korpus noch als Teil des Lagerfachs genutzt werden.

An einer Rückseite der Rippe ist eine nach hinten ansteigende Schrägfläche gebildet. Eine solche Schrägfläche ist mit den herkömmlichen Techniken zum Tiefziehen eines Innenbehälters des Lagerfachs einfacher zu realisieren als eine vertikale Rückseite.

Ein hinterschnittener Bereich des Lagerfachs, der sich zwischen der Rippe und einer Rückwand des Geräts befindet, kann einer ersten Ausgestaltung der Erfindung zufolge genutzt werden, um darin einen Verdampfer unterzubringen. Dabei kann es sich auch um einen No-Frost-Verdampfer handeln, da auch bei Kältegeräten dieses Typs die mit der Erfindung erreichte verbesserte Isolation im vorderen Bereich des Lagerfachs in vorteilhafter Weise zu einer Verringerung des Energieverbrauchs führt.

Die Schrägfläche kann sich über wenigstens die Hälfte der Tiefe, vorzugsweise sogar über die gesamte Tiefe des Lagerfachs erstrecken. Dies ist insbesondere zweckmäßig im Falle einer zweiten Ausgestaltung der Erfindung, bei der ein Verdampfer zwischen einem Innenbehälter des Lagerfachs und einer den Innenbehälter umgebenden Dämmstoffschicht angebracht ist.

Ein solcher Verdampfer kann über Decke, Seitenwände und Boden des Lagerfachs verteilt sein und auf diese Weise eine homogene Temperaturverteilung im Lagerfach erheblich begünstigen.

Rohrleitungsabschnitte eines solchen Verdampfers sollten in der Rippe verlaufen, um eine wirksame Kühlung der vorderen oberen Ecke des Lagerfachs zu ermöglichen. Außerdem sollten Rohrleitungsabschnitte des Verdampfers auch an der Schrägfläche angebracht sein, wobei eine sich kontinuierlich von der Rippe bis zur Rückwand erstreckende Schrägfläche eine gleichmäßige Verteilung der Rohrleitungsabschnitte ermöglicht.

Um dem relativ starken Wärmeeinfall im Kontaktbereich zwischen Korpus und Tür Rechnung zu tragen, können die Rohrabschnitte des Verdampfers in der Nähe der Tür dichter angeordnet sein als in der Nähe einer Rückwand des Lagerfachs.

Ein Heizrohr, das in herkömmlicher Weise an der Vorderseite des Korpus eingebettet sein kann, um das Niederschlagen von Feuchtigkeit aus der Umgebungsluft an freiliegenden Oberflächen des Korpus zu verhindern, kann erfindungsgemäß vorteilhaft in einem Kältemittelkreislauf stromabwärts von einem Verflüssiger angeordnet sein, da in Folge des durch den oben beschriebenen Gehäuseaufbau reduzierten Wärmeeinfalls die Außenflächen des Korpus in der Nähe der Tür nicht so kalt werden wie bei einem herkömmlichen Kältegerät.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch ein Haushaltskältegerät, hier ein Kombinationsgerät, gemäß des Standes der Technik;
- Fig. 2: einen Schnitt durch den unteren Bereich eines Kältegeräts gemäß einer Ausgestaltung der Erfindung;
- Fig. 3: einen zu Fig. 2 analogen Schnitt durch ein erfindungsgemäßes Kältegerät in No-Frost-Bauweise
- Fig. 4: einen zu Fig. 2 analogen Schnitt gemäß einer weiterentwickelten Ausgestaltung der Erfindung; und.
- Fig. 5: einen zu Fig. 2 analogen Schnitt gemäß einer fünften Ausgestaltung der Erfindung.

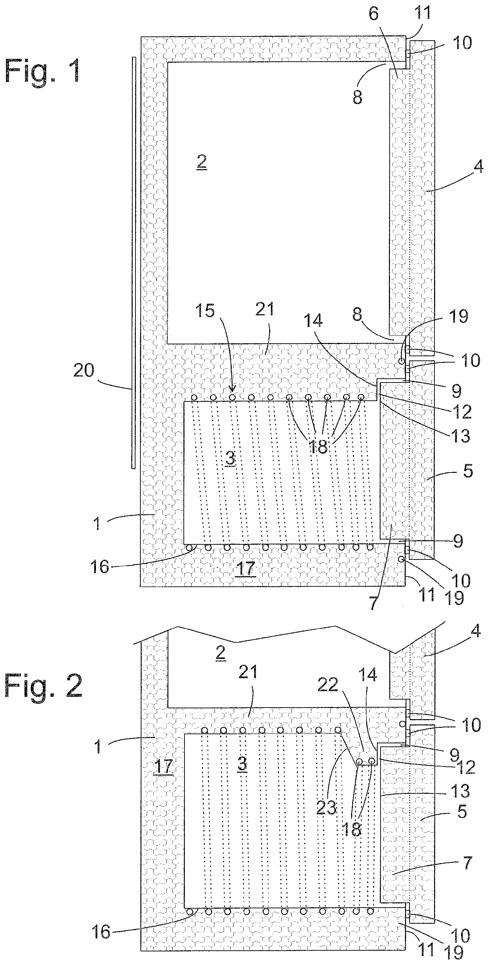

Fig. 1 zeigt einen Schnitt durch ein Kombinations-Haushaltskältegerät mit einem Korpus 1, einem Normalkühlfach 2, einem Gefrierfach 3 und Türen 4, 5 zum Verschließen der beiden Fächer. Die Türen 4, 5 weisen jeweils einen flach quaderförmigen, nach innen gerichteten Vorsprung 6 bzw. 7 auf, der in geschlossener Stellung der Tür 4 bzw. 5 in das zugeordnete Fach 2 bzw. 3 eingreift und dabei einen schmalen umlaufenden Luftspalt 8, 9 zwischen Schmalseiten des Vorsprungs 6 bzw. 7 und diesen gegenüberliegenden Decken-, Boden- und Seitenwandflächen des Fachs 2 bzw. 3 bildet. Über diesen Luftspalt 8 bzw. 9 findet unvermeidlicherweise ein Luftaustausch und ein Wärmetransport zwischen dem Inneren des Fachs 2 bzw. 3 und der Innenseite einer Dichtung 10 statt, die an einer Innenseite der Tür 4 bzw. 5 rings um deren Vorsprung 6 bzw. 7 angebracht ist und an einer Vorderseite 11 des Korpus 1 anliegt.

Während der Luftspalt 9 zwischen der Bodenfläche des Gefrierfachs 3 und der unteren Flanke des Vorsprungs 7 unmittelbar in das Gefrierfach 3 einmündet, ist an der Decke des Gefrierfachs 3 der Luftspalt 9 durch einen vertikalen Abschnitt 12 verlängert, der sich zwischen der Rückseite 13 des Vorsprungs 7 und einer an der Decke des Gefrierfachs 3 gebildeten vertikalen Flanke 14 erstreckt. Der Luftaustausch zwischen dem Inneren des Gefrierfachs 3 und der Innenseite der Dichtung 10 ist daher entlang der vorderen oberen Kante des Gefrierfachs 3 zum Einen durch die Verlängerung des Luftspalts 9, zum Anderen durch dessen Richtungswechsel erschwert, was den Wärmeeintrag in diesem Bereich des Gefrierfachs 3 und damit den Temperaturunterschied zwischen diesem Bereich und anderen Teilen des Gefrierfachs 3 deutlich reduziert.

Ein Verdampfer 15, der das Gefrierfach 3 kühlt, ist hier in Wrap-around-Bauweise implementiert, d. h. eine Rohrleitung für Kältemittel erstreckt sich schraubenlinienähnlich über Decke, Seitenwände und Boden des Gefrierfachs 3 zwischen einem Innenbehälter 16 und einer diesen umgebenden Dämmmaterialschicht 17. Der Innenbehälter 16 kann in an sich bekannter Weise aus Kunststoff tiefgezogen sein, wobei dann die Rohrleitung des Verdampfers 15 unmittelbar auf den Innenbehälter 16 aufgeklebt oder auf den Innenbehälter 16 außen umgebenden, gut wärmeleitenden metallischen Platten angebracht sein kann. Denkbar ist auch, den Innenbehälter 16 unmittelbar aus metallischen Platten zusammenzufügen, an deren Außenseiten dann die Rohrleitung des Verdampfers 15 angebracht werden kann.

Da der Wärmeeintrag über den Luftspalt 9 immer noch stärker ist als durch die Dämmmaterialschicht 17, ist es zweckmäßig, den vorderen Bereich des Gefrierfachs 3 stärker zu kühlen als den hinteren. Hierfür sind im dargestellten Ausführungsbeispiel Schleifen 18 der Kältemittelrohrleitung in einem vorderen Bereich des Gefrierfachs 3 mit einem kleineren Abstand zueinander verlegt als in einem hinteren Bereich.

Durch die verringerte Wärmeleitung im Bereich des Luftspalts 9 verringert sich die Heizleistung, die benötigt wird, um die Vorderseite 11 außerhalb der Dichtungen 10 so warm zu halten, dass dort keine Feuchtigkeit aus der Umgebungsluft auskondensiert. Eine Heizleitung 19, die in dem Fachmann vertrauter Weise mit verdichtetem warmem Kältemittel gespeist wird und an der Vorderseite 11 rings um die Öffnung des Gefrierfachs 3 verläuft, kann daher in einem Kältemittelkreislauf, der einen (nicht dargestellten) Verdichter, einen Verflüssiger 20, über den Abwärme des im Verdichter verdichteten und erwärmten Kältemittels an die Umgebung abgegeben wird, eine Drosselstelle und den Verdampfer 15 umfasst, zwischen dem Verflüssiger 20 und der Drosselstelle angeordnet sein, so dass das in der Heizleitung 19 zirkulierende Kältemittel bereits im Verflüssiger 20 vorgekühlt ist. Dadurch verringert sich nochmals der Wärmeeintrag in das Gefrierfach 3 über den Luftspalt 9.

Die Isolationswirkung ist im Ausführungsbeispiel der Fig. 1 erkauft durch ein vergrößertes Volumen einer Zwischenwand 21 zwischen den Fächern 2, 3 und einen entsprechenden Verlust an nutzbarem Volumen in den Fächern 2, 3. Die Ausgestaltung der Fig. 2 vermeidet diesen Nachteil, in dem die vertikale Flanke 14 an der Decke des Gefrierfachs 3 als türnahe Flanke einer sich über die gesamte Breite der Decke des Gefrierfachs 3 erstreckenden Rippe 22 ausgebildet ist und hinter einer schrägen Rückseite 23 der Rippe 22 das Gefrierfach 3 nach oben hinterschnitten ist. Die Dicke der Zwischenwand 21 kann hinter der Rippe 22 sogar noch geringer sein als davor, da zwischen den zwei gekühlten Fächern 2, 3 nur eine im Vergleich zu den Außenwänden des Korpus 1 relativ geringe Stärke der Dämmmaterialschicht 17 benötigt wird, wohingegen an einer Vorderkante der Zwischenwand 21 in der Vertikalen wenigstens ausreichend Platz vorhanden sein muss, um daran die Dichtungen 10 der Türen 4, 5 und zwischen den Dichtungen 10 die Heizleitung 19 unterzubringen.

Die Rückseite 23 der Rippe 22 ist bei dieser Ausgestaltung so steil, wie die zum Fertigen des Innenbehälters 16 verwendete Tiefziehtechnik zulässt. Die Rückseite 23 ist frei von Rohrleitungen des Verdampfers 15; im Ausgleich ist der Abstand zwischen zwei Rohrleitungsschleifen 18 in der Rippe 22 noch etwas geringer als am Boden des Gefrierfachs 3.

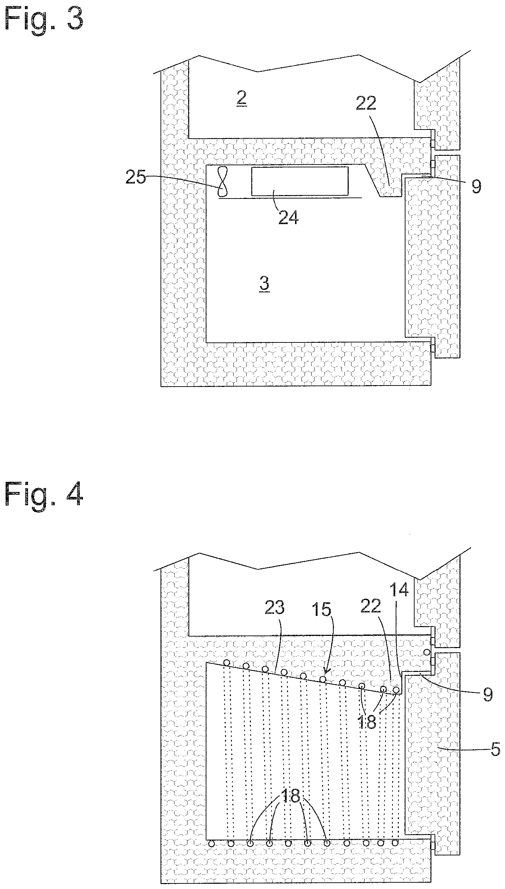

Ein Gefrierfach mit einem Innenbehälter 16, der wie in Fig. 2 gezeigt geformt ist, kann vorteilhaft benutzt werden, um darin, wie in Fig. 3 gezeigt, einen No-Frost-Verdampfer 24 und einen Ventilator 25 im hinterschnittenen Bereich des Gefrierfachs hinter der Rippe 22 unterzubringen. Der in Fig. 2 gezeigte Wrap-around-Verdampfer kann dann entfallen. Zwar gibt dieser Ventilator 25 im Betrieb Wärme an das Gefrierfach 3 ab, doch der verringerte Wärmezustrom in der oberen vorderen Ecke des Gefrierfachs 3 erlaubt es, die Antriebsleistung des Ventilators 25 und damit auch die von ihm in das Fach 3 abgegebene Heizleistung niedrig zu wählen.

Fig. 4 zeigt eine bevorzugte Weiterbildung des erfindungsgemäßen Kältegeräts, bei der die schräge Rückseite 23 der Rippe 22 auf praktisch die gesamte Tiefe des Gefrierfachs 3 verbreitert ist. Die Decke des Gefrierfachs 3 ist hier zwar abschüssig, aber auf praktisch ihrer gesamten Fläche eben, was die Anbringung des Wrap-around-Verdampfers 15 vereinfacht. Im Vergleich zur Ausgestaltung der Fig. 2 geht zwar immer wieder ein kleiner Teil des Volumens des Gefrierfachs 3 verloren, jedoch ist gerade dieser unmittelbar hinter der steilen Rückseite 23 in der Ausgestaltung der Fig. 2 liegende Bereich nur mit Schwierigkeiten zur Unterbringung von Gefriergut nutzbar.

Die Ausgestaltung der Fig. 4 hingegen ermöglicht eine weitgehend vollständige Nutzung des Gefrierfachvolumens, indem Gegenstände, die sich nicht über die gesamte Tiefe des Fachs 3 erstrecken, in mehreren in Tiefenrichtung gestaffelten Stapeln angeordnet werden.

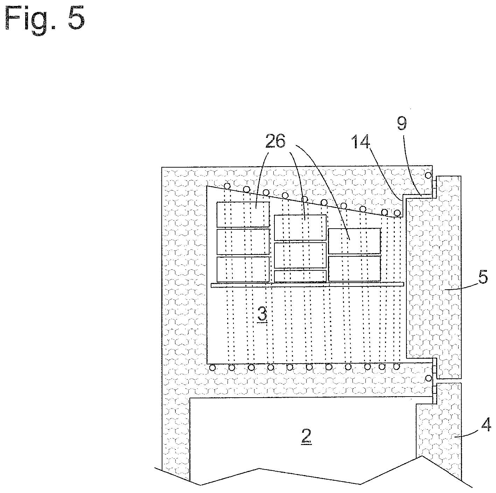

Da bei dieser Art der Unterbringung von Kühlgut kein Auszugkasten benutzt werden kann, ist es für den Nutzer bequem, wenn das Gefrierfach 3 ungefähr in seiner Augenhöhe angeordnet ist. D. h. es ist zweckmäßig, das Gefrierfach 3 über dem Normalkühlfach 2 anzuordnen, wie in der Schnittdarstellung der Fig. 5 gezeigt. Diese Fig. zeigt auch die oben erwähnte Unterbringung von Kühlgut in Form von in Tiefenrichtung gestaffelten, unterschiedlich hohen Stapeln aus Gebinden 26. In einem hinteren Bereich des Gefrierfachs können diese Stapel höher sein als der untere Rand der Flanke 14.

Selbstverständlich kommt die Anbringung des Gefrierfachs 3 oberhalb des Normalkühlfachs 2 auch bei den anderen oben beschriebenen Ausgestaltungen in Betracht, genau so wie die Kombination anderer als der genannten Typen von Lagerfächern in einem gleichen Korpus. Des weiteren kann die vertikale Flanke 14 auch an der Decke eines anderen Typs von Lagerfach als dem oben beschriebenen Gefrierfach bzw. an mehreren Lagerfächern eines gleichen Korpus vorgesehen sein.

## Patentansprüche

1. Kältegerät, insbesondere Haushaltskältegerät, mit einem Korpus (1), der ein einseitig offenes Lagerfach (3) umgibt, und einer Tür (5), die in geschlossener Stellung an einer Vorderseite (10) des Korpus (1) das Lagerfach (3) überdeckend anliegt und einen in das Lagerfach (3) eingreifenden Vorsprung (7) aufweist, wobei eine obere Flanke des Vorsprungs (7) einer Decke des Korpus (1) unter Ausbildung eines Luftspalts (9) gegenüberliegt, wobei an der Decke des Korpus (1) eine im wesentlichen vertikale Flanke (14) gebildet ist, die unter Verlängerung des Luftspalts (9) einer Rückseite (13) des Vorsprungs (7) gegenüberliegt, so dass ein Knick im Luftspalt (9) zwischen einem von der oberen Flanke des Vorsprungs (7) und der Decke des Korpus (1) begrenzten Abschnitt einerseits und einem zwischen der vertikalen Flanke (14) und der Rückseite (13) des Vorsprungs (7) begrenzten Abschnitt andererseits gebildet ist, wobei die vertikale Flanke (14) Teil einer von der Decke nach unten vorspringenden Rippe (22) ist, **dadurch gekennzeichnet, dass** an der Decke an einer Rückseite der Rippe (22) eine nach hinten ansteigende Schrägfläche (23) gebildet ist.

2. Kältegerät nach Anspruch 1, **dadurch gekennzeichnet, dass** die Schrägfläche (23) sich über wenigstens die Hälfte der Tiefe, vorzugsweise über die gesamte Tiefe des Lagerfachs (3) erstreckt.

3. Kältegerät nach einem der vorhergehenden Ansprüche, **dadurch gekennzeichnet, dass** im Lagerfach (3) hinter der vertikalen Flanke (14) ein Verdampfer (24) untergebracht ist.

4. Kältegerät nachAnspruch 1 oder 2, **dadurch gekennzeichnet, dass** ein Verdampfer (15) zwischen einem Innenbehälter (16) des Lagerfachs (3) und einer den Innenbehälter (16) umgebenden Dämmstoffschicht (17) angebracht ist.

5. Kältegerät nach Anspruch 4, **dadurch gekennzeichnet, dass** der Verdampfer (15) über Decke, Seitenwände und Boden des Lagerfachs (3) verteilt ist.

6. Kältegerät nach Anspruch 4 oder 5, **dadurch gekennzeichnet, dass** Rohrleitungsabschnitte (18) des Verdampfers (15) in der Rippe (22) verlaufen.

7. Kältegerät nach Anspruch 4 oder 5, **dadurch gekennzeichnet, dass** Rohrleitungsabschnitte (18) des Verdampfers (15) an der Schrägfläche (23) angebracht sind.

8. Kältegerät nach einem der Ansprüche 4 bis 7, **dadurch gekennzeichnet, dass** Rohrabschnitte (18) des Verdampfers (15) in der Nähe der Tür (5) dichter angeordnet sind als in der Nähe einer Rückwand des Lagerfachs (3).

9. Kältegerät nach einem der vorhergehenden Ansprüche, **dadurch gekennzeichnet, dass** ein an der Vorderseite (10) des Korpus (1) angeordnetes Heizrohr (19) in einem Kältemittelkreislauf stromabwärts von einem Verflüssiger (20) angeordnet ist.

## Claims

1. Refrigeration appliance, in particular household refrigeration appliance, having a carcass (1), which surrounds a storage compartment (3) that is open on one side, and a door (5) which, in a closed position, rests against a front (10) of the carcass (1) covering the storage compartment (3) and which has a protrusion (7) that projects into the storage compartment (3), wherein an upper flank of the protrusion (7) faces a top of the carcass (1) so as to form an air gap (9), wherein a substantially vertical flank (14) which faces a rear side (13) of the protrusion (7) and extends the air gap (9) is formed on the top of the carcass (1), so that a bend in the air gap (9) between a section bounded by the top flank of the protrusion (7) and the top of the carcass (1) on the one hand and a section bounded between the vertical flank (14) and the rear (13) of the protrusion (7) on the other hand is formed, wherein the vertical flank (14) is part of a rib (22) which projects downwards from the top, **characterised in that** a rearwardly rising inclined plane (23) is formed on the top on a rear side of the rib (22).

2. Refrigeration appliance according to claim 1, **characterised in that** the inclined plane (23) extends across at least half of the depth, preferably across the whole depth of the storage compartment (3).

3. Refrigeration appliance according to one of the preceding claims, **characterised in that** an evaporator (24) is accommodated in the storage compartment (3) behind the vertical flank (14).

4. Refrigeration appliance according to one of claims 1 or 2, **characterised in that** an evaporator (15) is attached between an inner container (16) of the storage compartment (3) and an insulation layer (17) surrounding the inner container (16).

5. Refrigeration appliance according to claim 4, **characterised in that** the evaporator (15) is distributed across the top, side walls and bottom of the storage compartment (3).

6. Refrigeration appliance according to claim 4 or 5, **characterised in that** pipeline sections (18) of the evaporator (15) run in the rib (22).

7. Refrigeration appliance according to claim 4 or 5, **characterised in that** pipeline sections (18) of the evaporator (15) are attached to the inclined plane (23).

8. Refrigeration appliance according to one of claims 4 to 7, **characterised in that** pipe sections (18) of the evaporator (15) are arranged closer together in the vicinity of the door (5) than in the vicinity of a rear wall of the storage compartment (3).

9. Refrigeration appliance according to one of the preceding claims, **characterised in that** a heating pipe (19) arranged on the front (10) of the carcass (1) is arranged in a refrigerant circuit downstream of a condenser (20).

## Revendications

1. Appareil frigorifique, en particulier appareil frigorifique ménager, avec un corps (1) qui entoure un compartiment de stockage (3) ouvert d'un côté, et une porte (5) couvrant de façon contiguë le compartiment de stockage (3) en un côté avant (10) du corps (1) en position fermée et une saillie (7) empiétant sur le compartiment de stockage (3), dans lequel un flanc supérieur de la saillie (7) est opposé à un plafond du corps (1) en formant un jeu (9), dans lequel un flanc essentiellement vertical (14) est constitué au plafond du corps (1), lequel flanc est opposé à un côté arrière (13) de la saillie (7) en prolongeant le jeu (9), de sorte qu'un pli est formé dans le jeu (9) d'une part entre une section délimitée par le flanc supérieur de la saillie (7) et le plafond du corps (1) et, d'autre part, entre une section délimitée par le flanc vertical (14) et le côté arrière (13) de la saillie (7), dans lequel le flanc vertical (14) fait partie d'une nervure (22) s'élançant en avant du plafond vers le bas, **caractérisé en ce qu'**une surface inclinée (23) montant vers l'arrière est constituée au plafond en un côté arrière de la nervure (22).

2. Appareil frigorifique selon la revendication 1, **caractérisé en ce que** la surface inclinée (23) s'étend sur au moins la moitié de la profondeur, de préférence sur l'ensemble de la profondeur du compartiment de stockage (3).

3. Appareil frigorifique selon l'une des revendications précédentes, **caractérisé en ce qu'**un évaporateur (24) est logé dans le compartiment de stockage (3), derrière le flanc vertical (14).

4. Appareil frigorifique selon la revendication 1 ou 2, **caractérisé en ce qu'**un évaporateur (15) est placé entre un contenant interne (16) du compartiment de stockage (3) et une couche de matériau isolant (17) entourant le contenant interne (16).

5. Appareil frigorifique selon la revendication 4, **caractérisé en ce que** l'évaporateur (15) est réparti sur le plafond, les parois latérales et le fond du compartiment de stockage (3).

6. Appareil frigorifique selon la revendication 4 ou 5, **caractérisé en ce que** des sections de conduite (18) de l'évaporateur (15) s'étendent dans la nervure (22).

7. Appareil frigorifique selon la revendication 4 ou 5, **caractérisé en ce que** des sections de conduite (18) de l'évaporateur (15) sont placées sur la surface inclinée (23).

8. Appareil frigorifique selon l'une des revendications 4 à 7, **caractérisé en ce que** des sections de conduite (18) de l'évaporateur (15) sont disposées de façon plus dense à proximité de la porte (5) qu'à proximité d'une paroi arrière du compartiment de stockage (3).

9. Appareil frigorifique selon l'une des revendications précédentes, **caractérisé en ce qu'**une conduite de chauffe (19) disposée sur le côté avant (10) du corps (1) est disposée en aval d'un condenseur (20) dans un circuit d'agent frigorifique.
